# EUROPEAN PATENT APPLICATION

(11) **EP 1 995 983 A1**
(43) Date of publication of application: **26.11.2008**
(21) Application number: 08154565.9
(22) Date of filing: 15.04.2008
(51) Int. Cl.: H04Q 7/32

(54) **Apparatus and method for storing network parameter in mobile communication system**

(30) Priority: 16.05.2007 KR 20070047492
(71) Applicant: Samsung Electronics Co., Ltd., Suwon-si, Gyeonggi-Do (KR)
(72) Inventor: Choi, Yong-Seock, Seoul (KR); Ku, Ah-Young, Seoul (KR)
(74) Representative: Harrison Goddard Foote

(57) **Abstract**

An apparatus and method capable of receiving network parameter information by using a Subscriber Identify Module (SIM) Application Toolkit (SAT) in a portable terminal is provided. The apparatus includes a portable terminal for selecting a menu for receiving the network parameter information required for network connection and for storing the network parameter information; and an Over the Air (OTA) server for transmitting network parameter information when a network parameter information request is received from the portable terminal.

## Description

### PRIORITY

This application claims priority under 35 U.S.C. § 119(a) to Korean patent application filed in the Korean Intellectual Property Office on May 16, 2007 and assigned Serial No. 2007-47492, the entire disclosure of which is incorporated herein by reference.

### BACKGROUND OF THE INVENTION

### 1. Field of the Invention

The present invention relates to an apparatus and method for receiving network parameter information by using a packet service in a portable terminal. More particularly, the present invention relates to an apparatus and method for receiving network parameter information according to an Over The Air (OTA) authentication configuration by using a Subscriber Identify Module (SIM) Application Toolkit (SAT) in a portable terminal.

### 2. Description of the Related Art

Mobile terminals are recently regarded as personal necessities of modern life for people of all ages and gender. Thus, service providers and terminal manufacturers are competitively developing differentiated products and services.

For example, certain mobile terminals have developed into multimedia devices capable of providing various services such as phonebooks, games, short messages, e-mails, wake-up calls, MPEG Layer 3 (MP3) players, digital cameras, and wireless Internet services.

In addition to the aforementioned functions, portable terminals provide a function for storing a plurality of phone numbers and other necessary user information (e.g., schedules, anniversaries, memos, photos, etc.) in a separate storage medium.

Recently, a portable terminal with a smart card has been developed. The smart card has a flash memory for storing user information and a variety of data.

Typically, the smart card includes a Subscriber Identify Module (SIM) of the portable terminal to store personal information of the portable terminal. When data is exchanged between the portable terminal and the smart card, information stored in the smart card is exchanged by using a SIM Application Toolkit (SAT).

In order for a user of the portable terminal to use a packet service (e.g., an Internet service, an e-mail service, a multimedia service, etc.), network parameter information has to be provided from a service provider.

To perform the packet service, the network parameter information is provided over the Internet. However, there is a problem in that Over The Air (OTA) authentication information cannot be received in an area where the Internet connection is not available when the network parameter information cannot be installed by the portable terminal itself.

Accordingly, there is a need for an apparatus and method for storing network parameter information required when a packet service is used in a portable terminal.

### SUMMARY OF THE INVENTION

An aspect of the present invention is to address at least the above-mentioned problems and/or disadvantages and to provide at least the advantages described below. Accordingly, an aspect of the present invention is to provide an apparatus and method for storing network parameter information in a mobile communication system.

Another aspect of the present invention is to provide an apparatus and method for storing network parameter information using a Subscriber Identify Module (SIM) Application Toolkit (SAT) in a mobile communication system.

According to an aspect of the present invention, a mobile communication system for providing network parameter information is provided. The mobile communication system includes a portable terminal for selecting a menu for receiving the network parameter information required for network connection and for storing the network parameter information; and an Over the Air (OTA) server for transmitting network parameter information when a network parameter information request is received from the portable terminal.

According to another aspect of the present invention, a method of storing network parameter information in a portable terminal is provided. The method includes, upon selecting a menu for receiving network parameter information, requesting an OTA server to send network parameter information corresponding to the selected menu; and, upon receiving the network parameter information from the OTA server, storing the received network parameter information.

According to another aspect of the present invention, a method of providing network parameter from a server providing network parameter information to a portable terminal is provided. The method includes obtaining network parameter information when a network parameter information request is received from the portable terminal; and transmitting the obtained network parameter information to the portable terminal.

### BRIEF DESCRIPTION OF THE DRAWINGS

The above and other aspects, features and advantages of certain exemplary embodiments of the present invention will become more apparent from the following detailed description when taken in conjunction with the accompanying drawings in which:
FIG. 1 is a block diagram illustrating a structure of a mobile communication system for providing network parameter information according to the present invention;
FIG. 2 is a flowchart illustrating a method of receiving network parameter information by using a Subscriber Identify Module (SIM) Application Toolkit (SAT) in a portable terminal according to the present invention;
FIG. 3 illustrates signal flow between a terminal for receiving network parameter information and a personal authenticating information card in a portable terminal according to the present invention;
FIG. 4 is a flowchart illustrating a method of providing network parameter information in an Over The Air (OTA) server according to the present invention;
FIG. 5 illustrates a signal flow when network parameter information is provided by using a SAT in a mobile communication system according to the present invention; and
FIGs. 6A, 6B, 6C and 6D illustrate examples of a screen of a portable terminal for storing network parameter information according to the present invention.

### DETAILED DESCRIPTION OF THE PREFERRED EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention.

Hereinafter, an apparatus and method of the present invention will be described in which network parameter information necessary for use of a packet service is received by use of a Subscriber Identify Module (SIM) Application Toolkit (SAT) in a mobile communication system.

The network parameter information is network configuration information which is provided from a service provider so that a user of a portable terminal can use a packet service function such as an Internet service, an e-mail service, a Multimedia Messaging Service (MMS), and so on. The network parameter information preferably includes one or more of a user Identification (ID), a password, an application protocol, a gateway address, a proxy address, a home Uniform Resource Locator (URL), a linger time use, a linger time, a secure connection, a static Internet Protocol (IP) use, a local IP address, a traffic class, a call type, or a call speed, each of which can be received by using an Over The Air (OTA) authentication configuration.

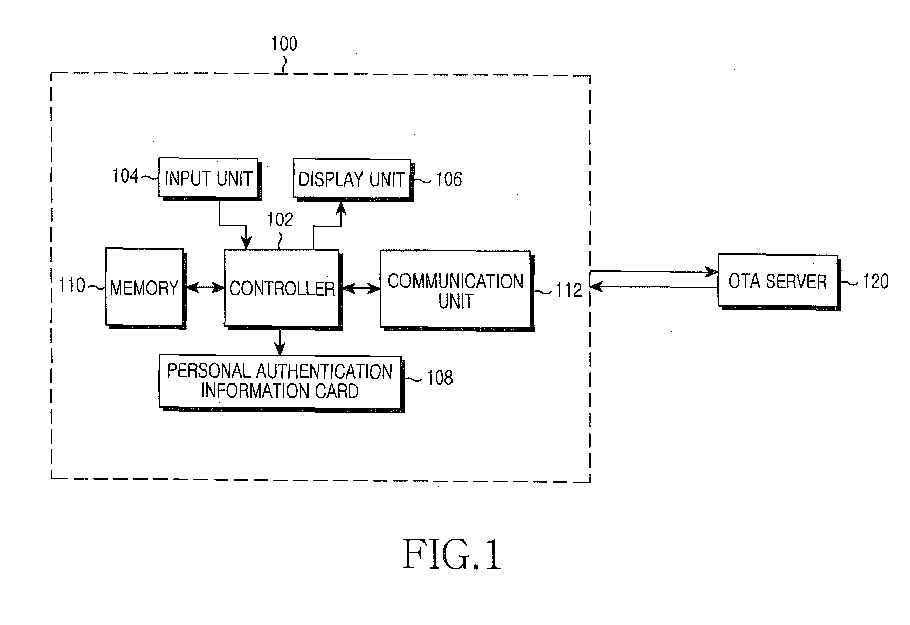

Referring to FIG. 1, the mobile communication system includes a portable terminal 100 and an OTA server 120. The portable terminal 100 includes a controller 102, an input unit 104, a display unit 106, a personal authenticating information card 108, a memory 110, and a communication unit 112.

The controller 102 provides overall control of the portable terminal 100. Specifically, the controller 102 controls voice calls and data communications. According to the present invention, in addition to its typical functions, a packet service function (e.g., an Internet service, an e-mail service, an MMS, etc.) is preferably further provided. For this, a menu is selected to receive network parameter information required for network configuration of the portable terminal 100. Upon detecting the selection of the menu, the controller 102 communicates with the personal authenticating information card 108 to receive the network parameter information.

In the communication with the personal authenticating information card 108, the controller 102 preferably uses an ENVELOPE command or a SELECT ITEM proactive command which is provided by an SAT.

That is, when the selection of the menu for receiving the network parameter information is detected, the controller 102 reports this to the personal authenticating information card 108 by using the ENVELOPE command provided by the SAT.

In addition, when submenu information (i.e., network parameter information list) is received from the personal authenticating information card 108 after detecting the selection of the menu for receiving the network parameter information, the received information is displayed on the display unit 106 under the control of the controller 102. Then, a user can select a menu item indicating network parameter information to be received.

Thereafter, the controller 102 controls the personal authenticating information card 108 to store network parameter information corresponding to the selected menu item.

In this case, the controller 102 may receive from the personal authenticating information card 108 the submenu information by use of the SELECT ITEM proactive command provided by the SAT.

The personal authenticating information card 108 is attachable to and detachable from the portable terminal 100 and includes a microprocessor and a memory chip. The personal authenticating information card 108 preferably includes a SIM card as a medium (e.g., smart card) for storing various information about the user. According to the present invention, the personal authenticating information card 108 stores network parameter information received from the OTA server 120 under the control of the controller 102.

In particular, according to the present invention, if information received from the controller 102 of the portable terminal 100 reports that the selection of the menu for receiving the network parameter information is detected, the personal authenticating information card 108 transmits to the potable terminal 100 the submenu information displayed upon detecting the selection of the menu for receiving the network parameter information. For example, the personal authenticating information card 108 may transmit a list (e.g., "1: Browser, 2: Internet, 3: MMS, 4: E-Mail") to the controller 102 of the portable terminal 100.

In this case, the personal authenticating information card 108 receives the information, which reports that the selection of the menu for receiving the network parameter information is detected, from the portable terminal 100 by using the ENVELOPE command. Further, the personal authenticating information card 108 delivers the submenu information to the portable terminal 100 by use of the SELECT ITEM proactive command.

The memory 110 includes a Read Only Memory (ROM), a Random Access Memory (RAM), and a flash ROM. The ROM stores a microcode of a program for controlling the controller 102 as well as various reference data.

The RAM is a working memory of the controller 102, and stores data temporarily generated when programs are running. The flash ROM stores various data which needs to be preserved and can be updated, such as a phone book, an outgoing message, and an incoming message.

The input unit 104 includes numeric key buttons (0 to 9), a menu button, an erase button, a confirm button, a talk button, an end button, an Internet access button, and a navigation key (or direction key) button as well as a plurality of function keys such as character input keys. The input unit 104 provides the controller 102 with key input data (e.g., request to detect the selection of a menu for receiving network parameter information) corresponding to a key pressed by the user.

The display unit 106 displays state information generated while the portable terminal 100 is operating, numeric characters, large amount of moving pictures, still pictures, and so on. The display unit 106 preferably is a color Liquid Crystal Display (LCD).

The communication unit 112 transmits and receives a Radio Frequency (RF) signal including data which is input and output through an antenna (not shown). For example, in a transmitting process, data to be transmitted is subject to a channel-coding process and a spreading process, and then the data is transformed to an RF signal. In a receiving process, the RF signal is received and transformed to a base-band signal, and the base-band signal is subject to a despreading process and a channel-decoding process, thereby restoring the data.

An apparatus for receiving network parameter information required to use a packet service by using a SAT in a mobile communication system has been described above. Hereinafter, a method of receiving network parameter information by using a STA in a mobile communication will be described according to an exemplary embodiment of the present invention.

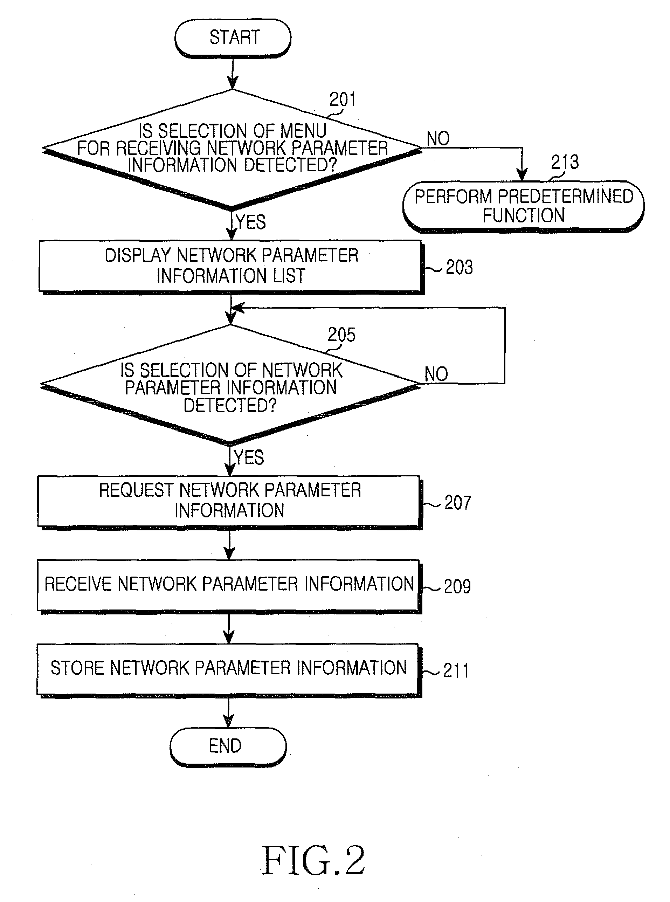

FIG. 2 is a flowchart illustrating a method of receiving network parameter information by using an STA in the portable terminal 100 of FIG. 1 according to the present invention. Referring to FIG. 2, in step 201, the portable terminal 100 checks whether the selection of a menu for receiving network parameter information is detected.

The network parameter information is network configuration information which is provided from a service provider so that a user of the portable terminal 100 can use a packet service function such as an Internet service, an e-mail service, an MMS, and so on. The network parameter information preferably includes one or more of a user ID, a password, an application protocol, a gateway address, a proxy address, a home URL, a linger time use, a linger time, a secure connection, a static IP use, a local IP address, a traffic class, a call type, or a call speed, each of which can be received by using an OTA authentication configuration.

If the selection of the menu for receiving the network parameter information is not detected, the portable terminal 100 performs a predetermined function (e.g., standby mode) in step 213.

Otherwise, if the selection of the menu for receiving the network parameter information is detected, in step 203, the portable terminal 100 outputs a network parameter information list to the display unit 106. In step 205, the portable terminal 100 checks whether network parameter information is selected by the user through a menu for receiving a plurality of pieces of network parameter information currently being displayed.

The network parameter information list preferably includes an MMS configuration menu, an e-mail configuration menu, and an Internet configuration menu.

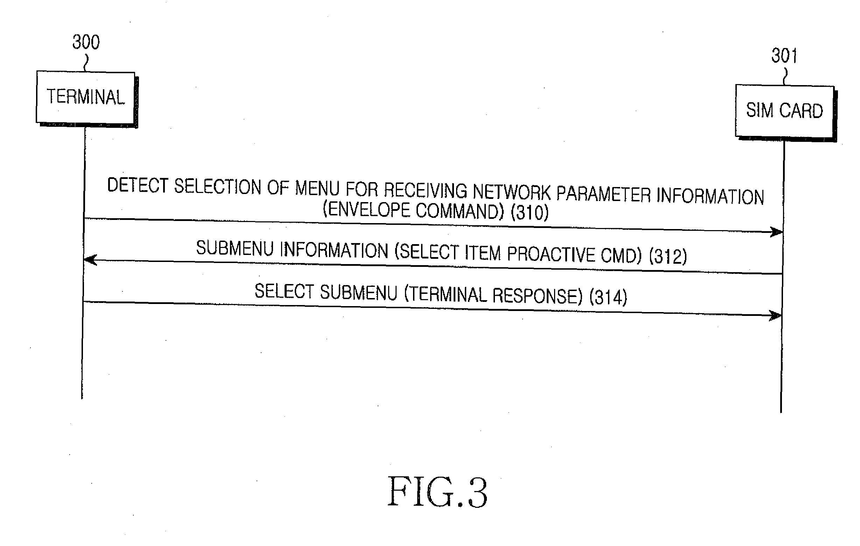

In step 205, the user selects the network parameter information, and communication is established between the controller 102 of the portable terminal 100 and the personal authenticating information card 108 of the portable terminal 100, As further described below with reference to FIG. 3.

If the selection of the network parameter information is not detected, the portable terminal 100 repeats step 205.

Otherwise, if the selection of the network parameter information is detected, in step 207, the portable terminal 100 requests the OTA service 120 to send the network parameter information selected by the user of the portable terminal 100. In step 209, the portable terminal 100 receives the network parameter information from the OTA server 120.

The network parameter information includes authentication information required to identify the user.

In step 211, the network parameter information received from the OTA server 120 is stored in the personal authenticating information card 108.

When the network parameter information received from the OTA server 120 is stored, the received authentication information may be input and stored in the personal authenticating information card 108.

The procedure of FIG. 2 then ends.

According to the aforementioned method, the network parameter information is pre-stored, and thus a process of connecting another server can be omitted when a packet service requiring the network parameter information is used.

FIG. 3 illustrates a signal flow between a terminal for receiving network parameter information and a personal authenticating information card in a portable terminal according to the present invention. The terminal is a portable terminal not including the personal authenticating information card. The personal authenticating information card is hereinafter assumed to be a SIM card.

Referring to FIG. 3, when a user selects a menu for receiving network parameter information, a terminal 300 informs a SIM card 301 that the menu for receiving network parameter information is selected in step 310.

In this step, the terminal 300 transmits to the SIM card 301 an ENVELOPE command provided by an SAT, thereby reporting the selection of the menu for receiving the network parameter information.

The ENVELOPE command is defined as a command that is transmitted from the terminal 300 to the SIM card 301.

Upon receiving the ENVELOPE command for reporting the selection of the menu for receiving the network parameter information, the SIM card 301 transmits to the terminal 300 submenu information (i.e., network parameter information list) displayed upon detecting the selection of the menu for receiving the network parameter information in step 312. For example, the submenu information transmitted by the SIM card may be "1: Browser, 2: Internet, 3: MMS, 4: E-Mail".

To transmit the submenu information to the terminal 300, the SIM card 301 may use a SELECT ITEM proactive command provided by the SAT. The SELECT ITEM proactive command is defined as a command that is transmitted from the SIM card 301 to the terminal 300.

Upon receiving the submenu information, the terminal 300 displays the received information on the display unit 106 (see FIG. 1), and thus a user selects one piece of parameter information to be received from the network parameter information list. The terminal 300 transmits the selected parameter information to the SIM card 301 in step 314.

The selected parameter information may be transmitted by using "Terminal Response" which is sent in response to the SELECT ITEM proactive command.

According to the aforementioned method, the SIM card 301 detects the selection of network parameter information to be configured, and then requests to the terminal 300 to send network parameter information corresponding to the selected information.

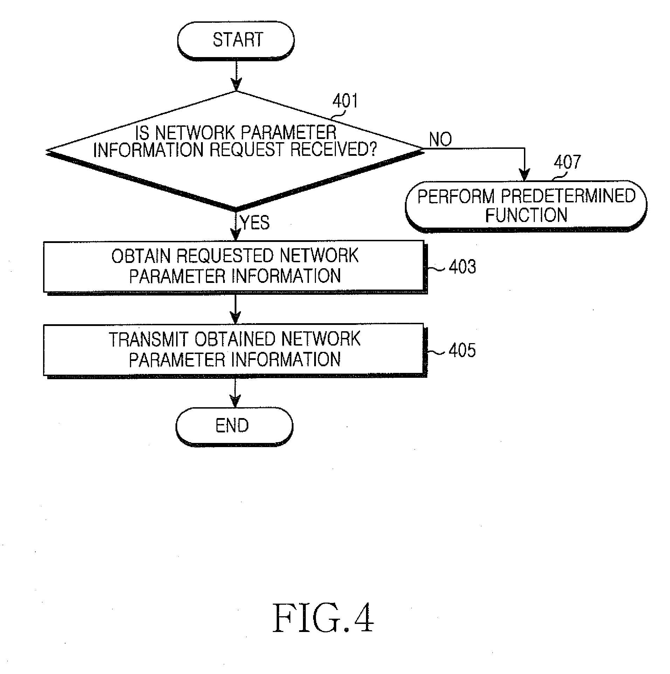

FIG. 4 is a flowchart illustrating a method of providing network parameter information in the OTA server 120 of FIG. 1 according to the present invention. Referring to FIG. 4, in step 401, the OTA server 120 checks whether a network parameter information request is received from the portable terminal 100.

The network parameter information is network configuration information which is provided from a service provider so that a user of the portable terminal 100 can use a packet service function such as an Internet service, an e-mail service, an MMS, and so on. The network parameter information preferably includes one or more of a user ID, a password, an application protocol, a gateway address, a proxy address, a home URL, a linger time use, a linger time, a secure connection, a static IP use, a local IP address, a traffic class, a call type, or a call speed, each of which can be received by using an OTA authentication configuration.

If the request is not received, in step 407, the OTA server 120 performs a predetermined function (e.g., standby mode).

If the request is received, in step 403, the OTA server 120 obtains network parameter information requested by the portable terminal 100. In step 405, the obtained network parameter information is transmitted to the portable terminal 100.

The procedure of FIG. 4 then ends.

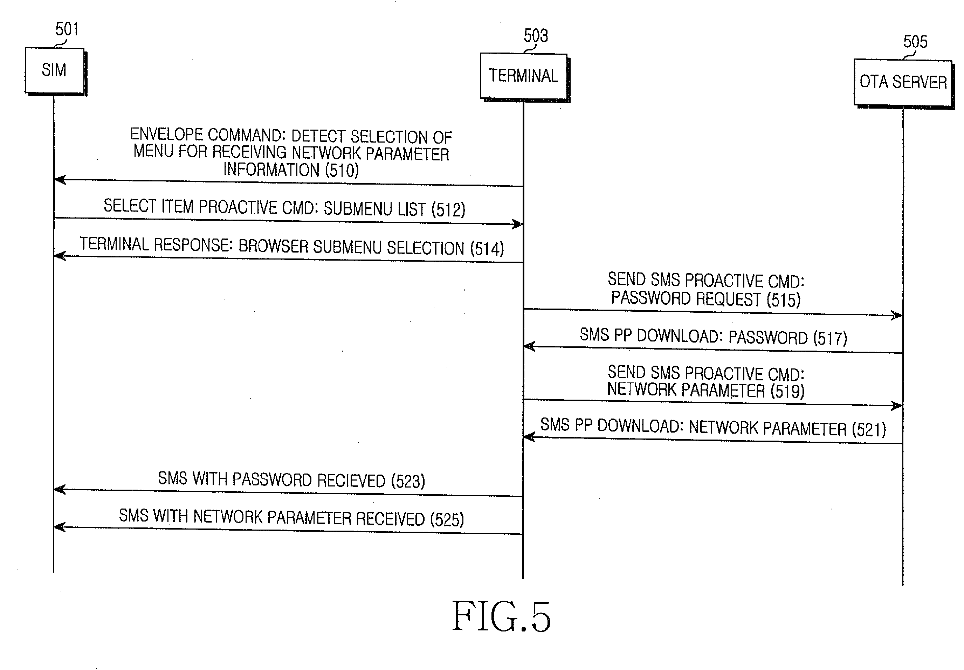

Referring to FIG. 5, the mobile communication system includes a portable terminal, which has a SIM card 501 and a terminal 503, and an OTA server 505.

Upon detecting the selection of a menu for receiving network parameter information by as user, the terminal 503 reports to the SIM card 501 that the selection of the menu for receiving the network parameter information is detected in step 510.

In the process of reporting that the selection of the menu for receiving the network parameter information is detected, the terminal 503 may transmit an ENVELOIPE command provided by the SAT to the SIM card 501.

The ENVELOPE command is defined as a command that is transmitted from the terminal 503 to the SIM card 501.

Upon receiving the ENVELOPE command which reports that the selection of the menu for receiving the network parameter information is detected, the SIM card 501 transmits to the terminal 503 submenu information (i.e., network parameter information list) displayed upon detecting the selection of the network parameter information in step 512. For example, the submenu information transmitted by the SIM card 501 may be "1: Browser, 2: Internet, 3: MMS, 4: E-Mail".

To transmit the submenu information to the terminal 503, the SIM card 501 may use a SELECT ITEM proactive command provided by the SAT. The SELECT ITEM proactive command is defined as a command that is transmitted from the SIM card 501 to the terminal 503.

Upon receiving the submenu information, the terminal 503 displays the received information on the display unit 106 (see FIG. 1), and thus the user selects one piece of parameter information to be received from the network parameter information list. The terminal 503 transmits the selected parameter information to the SIM card 501 in step 514.

The selected network parameter information may be transmitted by using "Terminal Response" which is sent in response to the SELECT ITEM proactive command.

According to the aforementioned method, the SIM card 501 detects the selection of network parameter information to be configured, and then requests to the terminal 503 to send network parameter information.

Thereafter, the terminal 503 requests the OTA server 505 to send network parameter information in steps 515 and 519. The network parameter information may include authentication information required to identify the user.

Upon receiving the network parameter information request, the OTA server 505 transmits network parameter information corresponding to the request to the terminal 503 in steps 517 and 521.

In this case, the terminal 503 may request the network parameter information by using a "Send SMS Proactive" command, a "Send USSD" command, and so on. Upon receiving the request, the OTA server transmits the network parameter information to the terminal 503 by using SMS-PP download, normal SMS, and so on.

Upon receiving the network parameter information, the terminal 503 stores the received network parameter information in the SIM card 501.

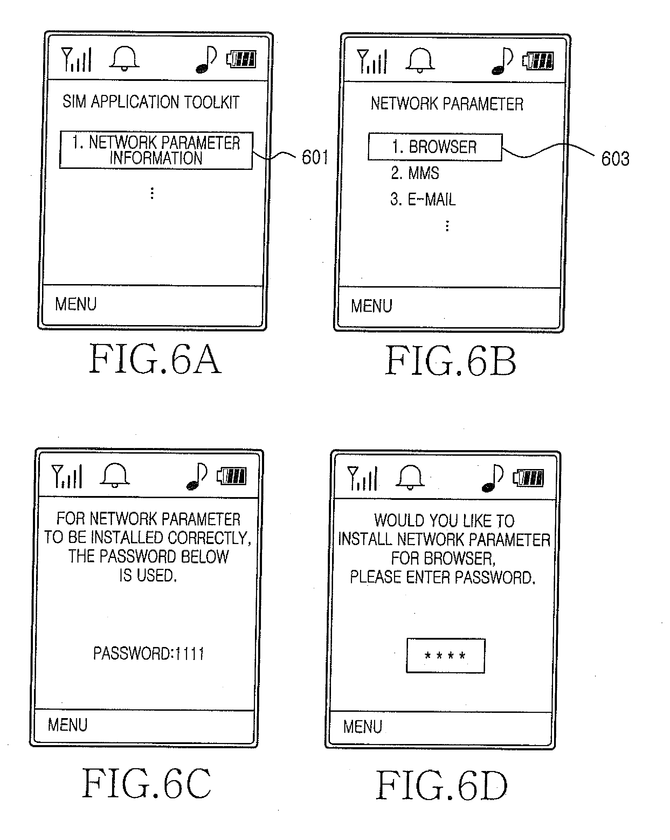

FIG. 6A illustrates a screen displayed when a user selects a menu for receiving network parameter information. Referring to FIG. 6A, when the menu for receiving network parameter information is selected, as described above in step 601, the portable terminal 100 (see FIG. 1) uses an ENVELOPE command provided by a SAT so as to inform the SIM card 108 (see FIG. 1) that the menu for receiving network parameter information has been selected.

FIG. 6B illustrates a screen on which submenu information is displayed upon detecting the selection of the menu for receiving the network parameter information. Referring to FIG. 6B, the submenu information includes items, e.g., "1: Browser, 2: MMS, 3: E-Mail" and can be displayed by using information transmitted from the SIM card 108 to the portable terminal 100.

The SIM card 108 may transmit submenu information to the terminal 300 by using a SELECT ITEM proactive command.

When the user selects one item from the submenu (step 603), the portable terminal requests the OTS server 120 to send network parameter information for the selected item.

FIG. 6C illustrates a screen of the portable terminal 100 when network parameter information received from the OTA server 120 is displayed. The screen of FIG. 6C is displayed when the portable terminal 100 receives authentication information (i.e., network parameter information) from the OTA server 120.

The authentication information is required to identify the user of the portable terminal 100.

FIG. 6D illustrates a screen of a portable terminal, displayed to perform a process in which network parameter information received from the OTA server 120 is stored in the personal authenticating information card (i.e., SIM card) 108.

Referring to FIG. 6D, in order to store network parameter information received from the OTA server 120, the portable terminal 100 inputs the received authentication information and store it in the personal authenticating information card 108.

According to the present invention, network parameter information is stored by using a SAT in a portable terminal. Therefore, the network parameter information can be received even when the portable terminal is used in an area where network access is not allowed.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the invention has been shown and described with reference to certain exemplary embodiments thereof, it will be understood by those skilled in the art that various changes in form and details may be made therein without departing from the spirit and scope of the invention as defined by the appended claims and their equivalents. Therefore, the scope of the invention is defined not by the detailed description of the invention but by the appended claims and their equivalents, and all differences within the scope will be construed as being included in the present invention.

## Claims

1. A mobile communication system for providing network parameter information, the system comprising:
a portable terminal for selecting a menu for receiving network parameter information required for network connection and for storing the network parameter information; and
an Over the Air (OTA) server for transmitting network parameter information when a network parameter information request is received from the portable terminal.

2. The mobile communication system of claim 1, wherein the portable terminal comprises:
a personal authenticating information card for storing network parameter information received from the OTA server; and
a controller for selecting a menu for receiving the network parameter information by accessing the personal authenticating information card and for requesting the OTA server to send network parameter information corresponding to the selected menu.

3. The mobile communication system of claim 2, wherein the network parameter information is required in a packet service which performs network applications.

4. The mobile communication system of claim 3, wherein the network applications are one of a browser service, an Internet service, a Multimedia Message Service and an e-mail service.

5. The mobile communication system of claim 3, wherein the controller and the personal authenticating information card can receive the network parameter information using a Subscriber Identify Module (SIM)/Universal SIM Application Toolkit.

6. The mobile communication system of claim 5, wherein the controller allows the network parameter information received from the OTA server to be stored in the personal authenticating information card.

7. The mobile communication system of claim 6, wherein the controller uses pre-stored network parameter information when a function requiring network connection is performed.

8. The mobile communication system of claim 3, wherein the network parameter information includes authentication information for identifying a user of the portable terminal.

9. The mobile communication system of claim 8, wherein the network parameter information is one of a user Identification, a password, an application protocol, a gateway address, a proxy address, a home Uniform Resource Locator, a linger time use, a linger time, a secure connection, a static Internet Protocol (IP) use, a local IP address, a traffic class, a call type, and a call speed.

10. A method of storing network parameter information in a portable terminal, the method comprising:
upon selecting a menu for receiving network parameter information, requesting an Over The Air (OTA) server to send network parameter information corresponding to the selected menu; and
upon receiving the network parameter information from the OTA server, storing the received network parameter information.

11. The method of claim 10, wherein the portable terminal uses pre-stored network parameter information when a function requiring network connection is performed.

12. The method of claim 10, wherein the menu for receiving the network parameter information can be performed by using a Subscriber Identify Module (SIM)/Universal SIM Application Toolkit.

13. The method of claim 12, wherein the network parameter information is required in a packet service which performs network applications.

14. The method of claim 13, wherein the network applications are one of a browser service, an Internet service, a Multimedia Message Service, and an e-mail service.

15. The method of claim 13, wherein the network parameter information includes authentication information for identifying a user of the portable terminal.

16. The method of claim 15, wherein the network parameter information is one of a user Identification, a password, an application protocol, a gateway address, a proxy address, a home Uniform Resource Locator, a linger time use, a linger time, a secure connection, a static Internet Protocol (IP) use, a local IP address, a traffic class, a call type, and a call speed.

17. A method of providing network parameter information from a server providing network parameter information to a portable terminal, the method comprising:
obtaining network parameter information when a network parameter information request is received from the portable terminal; and
transmitting the obtained network parameter information to the portable terminal.

18. The method of claim 17, wherein the network parameter information is required in a packet service which performs network applications, which include one of, a browser service, an Internet service, a Multimedia Message Service, and an e-mail service.

19. The method of claim 18, wherein the network parameter information includes authentication information for identifying a user of the portable terminal.

20. The method of claim 19, wherein the network parameter information is one of a user Identification, a password, an application protocol, a gateway address, a proxy address, a home Uniform Resource Locator, a linger time use, a linger time, a secure connection, a static Internet Protocol (IP) use, a local IP address, a traffic class, a call type, and a call speed.

21. A computer-readable recording medium having recorded thereon a program for storing network parameter information in a portable terminal, comprising:
a first segment, for requesting an Over The Air (OTA) server to send network parameter information corresponding to the selected menu upon selecting a menu for receiving network parameter information; and
a second segment, for storing the received network parameter information upon receiving the network parameter information from the OTA server.

22. A computer-readable recording medium having recorded thereon a program for providing network parameter information from a server providing network parameter information to a portable terminal, comprising:
a first segment, for obtaining network parameter information when a network parameter information request is received from the portable terminal; and
a second segment, for transmitting the obtained network parameter information to the portable terminal.
